# EUROPEAN PATENT SPECIFICATION

(11) **EP 4 359 370 B1**
(45) Date of publication and mention of the grant of the patent: **14.01.2026**
(21) Application number: 22740951.3
(22) Date of filing: 22.06.2022
(51) Int. Cl.: C05G 5/30, C05C 1/00, C05C 9/00

(54) **PARTICLES COATED WITH A COMPOSITION COMPRISING CHOLINE CHLORIDE**
MIT EINER CHOLINCHLORID ENTHALTENDEN ZUSAMMENSETZUNG BESCHICHTETE PARTIKEL
PARTICULES ENROBÉES D'UNE COMPOSITION COMPRENANT DU CHLORURE DE CHOLINE

(30) Priority: 22.06.2021 GB 202108968
(43) Date of publication of application: 01.05.2024
(73) Proprietor: Yara UK Limited, York, YO42 1DN (GB)
(72) Inventor: WARD, Stuart, York (GB); BROWN, Jonathan, York (GB)
(74) Representative: Dummett Copp LLP
(86) International application number: PCT/GB2022/051583
(87) International publication number: WO 2022/269252

(56) References cited:
- CN-A- 103 664 314
- CN-A- 110 606 793
- FERGUSON RICHARD: "Nitrogen Inhibitors for Improved Fertilizer Use Efficiency | CropWatch | University of Nebraska-Lincoln", 14 January 2019 (2019-01-14), pages 1 - 4, XP055952549, Retrieved from the Internet <URL:https://cropwatch.unl.edu/2019/nitrogen-inhibitors-improved-fertilizer-use-efficiency> [retrieved on 20220818]

## Description

### Field of the invention

The present invention is related to the field of coated particles, in particular nitrogen-containing fertilizer particles.

### Background of the invention

Fertilizer products can be sold as solid, particulate compositions or liquid compositions. Solid particulate compositions are the most common as they are cheaper to transport since they do not contain any water, and are easier to apply in the fields. Application can be done manually, or mechanically, for example with spreaders.

Fertilizer particles need to satisfy several physical requirements, such as hardness, or moisture absorption, so that they tolerate prolonged storage, handling actions and transport to the final customer. The properties of the particles can be modified using additives in the production steps, so that the additives are evenly distributed in the particles, but also by the addition of a coating composition on the particles.

These coating compositions may comprise different chemical components such as a wax, an oil, a polymer, or a resin. Coating compositions may also be water-based, although these are usually not preferred because they can weaken the fertilizer particle. Other coating agents may contain organic, protic or aprotic, solvents. The coating agent will eventually be added to the soil with the particle, so it is important that the coating agent is not toxic to the soil and crops. It may also be an advantage that the coating agent is biodegradable to further decrease its impact on the environments after application.

CN110606793A (Hainan Tiandao Seed Ind Co Ltd, 2019) discloses fertilizer particles coated with a composition comprising boric acid, humic acid, and up to 20 weight% of choline chloride.

### Summary of the invention

It was found out that deep eutectic solvents comprising choline chloride could be used as a coating composition for fertilizer particles, in particular fertilizer particles comprising nitrogen. The coating composition is biodegradable, reduces the emission of ammonia during the storage of the coated particles and also reduces the emission of ammonia once the particles are applied to soils.

In a first aspect, the present disclosure provides a solid, particulate composition comprising a solid, particulate core substrate, and a coating layer of a coating composition contacting the solid, particulate core substrate, wherein the coating composition comprises from 30 to 90 weight% of choline chloride.

In another aspect, the present disclosure provides a method to manufacture a solid, particulate composition according to the first aspect of the present disclosure, the method comprising the steps of: a) providing a solid, particulate core substrate; and b) applying, on the solid, particulate core substrate, a coating composition comprising choline chloride.

### Brief description of the figures

Figure 1 shows the results of bottle tests with several batches of coated and uncoated fertilizer particles.
Figure 2 shows the results of soil volatilization tests with several batches of coated and uncoated fertilizer particles.
Figure 3 shows the results of crush tests with several batches of coated and uncoated urea particles.
Figure 4 shows the results of bottle tests with several batches of coated and uncoated urea particles.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

In a first aspect, the present disclosure provides a solid, particulate composition comprising a solid, particulate core substrate, and a coating layer of a coating composition contacting the solid, particulate core substrate, wherein the coating composition comprises 30 to 90 weight% of choline chloride.

As used herein, a solid, particulate composition refers to a composition comprising solid particles, wherein all the particles have essentially the same composition.

Solid particles produced industrially often have to tolerate storage, transport and different handling operations before they are used by the final customer. The customer may also subject the particles to a mechanical action, which requires that the particles fulfil a number of physical characteristics. Millions of tons of fertilizer particles are produced every year worldwide. These particles need to satisfy several physical requirements, such as hardness, or moisture absorption, until the final use by the customer.

To help the particles reach these specifications, it is common practice to apply a coating composition onto them.

The present inventors have found out that deep eutectic solvents comprising choline chloride could be used as a coating composition for solid particles, in particular for solid, fertilizer particles.

A eutectic mixture refers to a mixture of two solid components wherein the mixture has a lower melting point than either of the two components. A deep eutectic solvent refers to a mixture of Lewis or Brønsted acids or bases. As used herein, Lewis acid, Lewis base, Brønsted acid, and Brønsted base have the definition commonly accepted in the chemistry field. Deep eutectic solvents are typically formed by mixing a quaternary ammonium salt and a metal salt, in particular a metal chloride, or a hydrogen bond donor.

Choline chloride is the common name of the chemical with the formula, [(CH₃)₃NCH₂CH₂OH]Cl, with the official IUPAC name: 2-hydroxy-N,N,N-trimethylethan-1-aminium chloride, the CAS (Chemical Abstracts Service) number: 67-48-1, and a molecular weight of 139.6 g/mol. It is well known that choline chloride may form eutectic mixtures with a wide variety of compounds.

Coating compositions comprising a eutectic mixture comprising choline chloride are considered biodegradable, which reduces the environmental impact of fertilizer particles coated with such coating compositions.

Pure choline chloride has a melting point of 302 °C. However, it can form a eutectic mixture with a suitable compound, in particular a hydrogen bond donor, such as urea, an alcohol, or a carboxylic acid. For example, a mixture of choline chloride and urea in a 1:2 molar ratio has a freezing point of only 12 °C. A mixture of choline chloride and monoethylene glycol in a 1:2 molar ratio has a freezing point of -20 °C.

In one embodiment, the coating composition comprises from 35 to 90 weight%, from 30 to 80 weight%, or from 35 to 80 weight% of choline chloride.

The solid, particulate core substrate may be any substrate in the form of solid particles. In one embodiment, the solid, particulate core substrate is a solid, particulate fertilizer substrate.

In one embodiment, the solid, particulate composition is a solid, particulate fertilizer composition.

In one embodiment, the solid, particulate core substrate comprises a source of nitrogen, in particular a compound selected from the group consisting of an ammonium salt, a nitrate salt, urea and mixtures thereof. It was found that the coating composition comprising choline chloride was particularly efficient at reducing ammonia volatilization of coated particles comprising urea and/or an ammonium salt during storage. Urea may slowly decompose during storage to give off ammonia. This reaction is highly undesirable as ammonia is a toxic gas, and the evaporation reduces the agronomical content of the particles when applied to fields. Ammonium ions may be deprotonated and transform into ammonia which is volatile at ambient temperature and pressure.

In one embodiment, the solid, particulate core substrate comprises from 10 to 99 weight%, from 20 to 99 weight%, from 30 to 99 weight%, from 40 to 99 weight%, or from 50 to 99 weight% of the source of nitrogen, in particular an ammonium salt, a nitrate salt, or urea. In one embodiment, the solid, particulate core substrate comprises from 10 to 95 weight%, from 20 to 95 weight%, from 30 to 95 weight%, from 40 to 95 weight%, or from 50 to 95 weight% of the source of nitrogen, in particular an ammonium salt, a nitrate salt, or urea. In one embodiment, the solid, particulate core substrate comprises from 50 to 99 weight% of an ammonium salt, such as ammonium nitrate, an ammonium phosphate salt (for example monoammonium phosphate or diammonium phosphate), or ammonium sulfate.

In particular, it was observed that a composition comprising choline chloride and malic acid completely stopped ammonia emissions from pure urea particles during 120 days of storage.

In one embodiment, the coating composition comprises an organic acid, in particular an organic acid selected from the group consisting of lactic acid and malic acid. Organic acids, in particular di-acids such as malonic acid, malic acid, and lactic acid, are known to form eutectic mixtures with choline chloride. In particular, some eutectic solvents comprising choline chloride and an organic acid, such as malonic acid, malic acid, phenylacetic acid and phenylpropionic acid, have a melting point around or below 20 °C, which may facilitate their application as coating on the solid, particulate core substrate. In particular, it was observed that compositions comprising malic acid had a lower viscosity than coating compositions comprising other organic acid. The lower viscosity is an advantage to coat the solid, particulate core substrate with a thin and evenly distributed layer.

In one embodiment, the coating composition comprises an organic acid selected from the group consisting of valeric acid, mandelic acid, phenylacetic acid, tartaric acid, malonic acid, adipic acid, benzoic acid, glutamic acid, phenylpropionic acid, oxalic acid, and mixtures thereof.

In one embodiment, the molar ratio of choline chloride to the organic acid is from 2:1 to 1:2. Eutectic mixtures of choline chloride and organic acid often have a molar ratio comprised between 2:1 and 1:2.

In one embodiment, the coating composition comprises from from 10 to 70 weight%, from 20 to 70 weight%, from 10 to 60 weight%, from 10 to 50 weight%, from 20 to 60 weight%, from 20 to 50 weight%, from 10 to 40 weight%, from 20 to 40 weight%, from 25 to 40 weight%, or from 25 to 35 weight% of an organic acid, such as lactic acid or malic acid.

In one embodiment, the coating composition comprises a compound selected from the group consisting of urea, urea derivatives, monoethylene glycol and glycerol. Small organic molecules other than organic acid, may also form eutectic mixtures. Urea derivatives refer to a group consisting of molecules that comprise a urea moiety in their structure, such as 1-methyl urea, 1,1-dimethyl urea, and 1,3-dimethyl urea; and thiourea which has the same structure as urea, but the oxygen atom has been replaced with a sulphur atom. In one embodiment, the coating composition comprises a compound selected from the group consisting of urea, 1-methyl urea, 1,1-dimethyl urea, and 1,3-dimethyl urea, thiourea, monoethylene glycol, and glycerol.

In one embodiment, the coating composition comprises an element selected from the group of phenol, 1,4-butanediol, fructose, glucose, and mixtures thereof. Hydrogen bond donors such as alcohols are able to form eutectic mixtures with choline chloride, that may be used as coating composition on solid particles.

In one embodiment, the molar ratio of choline chloride to the compound selected from the group consisting of urea, urea derivatives, monoethylene glycol and glycerol, is from 2:1 to 1:2.

In one embodiment, the coating composition comprises from from 10 to 70 weight%, from 20 to 70 weight%, from 10 to 60 weight%, from 10 to 50 weight%, from 20 to 60 weight%, from 20 to 50 weight%, from 10 to 40 weight%, from 20 to 40 weight%, from 25 to 40 weight%, or from 25 to 35 weight% of a compound selected from the group consisting of urea, urea derivatives, monoethylene glycol and glycerol.

In one embodiment, the coating composition comprises choline chloride, an organic acid and a compound selected from the group consisting of urea, urea derivatives, monoethylene glycol and glycerol. Eutectic mixtures comprising three components including choline chloride are also known in the field. It was found that eutectic mixtures comprising three components often had very good properties, such as low melting temperature and a viscosity high enough so that the coating on particles was better, i.e. more even, than other compositions.

In one embodiment, the coating composition comprises malic acid, choline chloride and monoethylene glycol. In one embodiment, the coating composition comprises malic acid, choline chloride and monoethylene glycol in a molar ratio of 1 (malic acid):1 (choline chloride):2 (monoethylene glycol).

In one embodiment, the coating composition comprises malic acid, choline chloride and glycerol. In one embodiment, the coating composition comprises malic acid, choline chloride and glycerol in a molar ratio of 1 (malic acid):1 (choline chloride):2 (glycerol).

The coating compositions comprising malic acid, and choline chloride, and optionally monoethylene glycol or glycerol, were kept for up to 8 weeks at 0 °C, 20 °C, and 45 °C, and remained stable, i.e. no separation, precipitation or crystallization was observed during the test.

In one embodiment, the solid, particulate composition comprises from 0.01 to 2.0 wt%, or from 0.01 to 1.0 wt%, from 0. 1 to 2.0 wt%, or from 0.1 to 1.0 wt% of the coating composition. The amount of coating composition may be varied depending on the effects to be obtained. An amount of coating composition above 2.0 weight% is often not desirable as it might make the particles sticky, which make their handling and storage more problematic, and it also reduces the agronomical value of the particle.

In one embodiment, the solid, particulate core substrate is homogeneous. As used herein, a homogeneous solid, particulate core substrate refers to a substrate that has an homogeneous structure throughout. The substrate may contain small particles of different components, but these particles are evenly distributed in the substrate. Particles obtained from a melt are often homogeneous regardless of the solidification method used (prilling, granulation, pastillation, pugmill, spherodizer).

In one embodiment, the solid, particulate core substrate comprises a further nutrient component, in particular wherein the nutrient component is selected from the group consisting of a phosphate salt, a potassium salt, and mixtures thereof. Phosphate salts, and potassium salts are common nutrient sources used in agriculture. The substrate may contain one or more nutrients. For example, the substrate may contain an ammonium phosphate salt, such as monoammonium phosphate and diammonium phosphate, which contains two nutrients, nitrogen, in the form of ammonium, and phosphorus, in the form of phosphate. The substrate may also contain urea and a salt mentioned above, such as urea and a potassium salt. It is common for fertilizer substrate to contain more than one nutrient source as they can be used to provide multiple nutrients to crops in a single application.

In one embodiment, the solid, particulate core substrate comprises from 1 to 90 weight%, from 10 to 90 weight%, from 20 to 90 weight%, from 30 to 90 weight%, from 40 to 90 weight%, from 50 to 90 weight%, from 10 to 50 weight%, from 20 to 50 weight%, from 30 to 50 weight%, from 10 to 40 weight%, or from 10 to 30 weight%, of a potassium salt.

In one embodiment, the solid, particulate core substrate comprises from 1 to 90 weight%, from 10 to 90 weight%, from 20 to 90 weight%, from 30 to 90 weight%, from 40 to 90 weight%, from 50 to 90 weight%, from 10 to 50 weight%, from 20 to 50 weight%, from 30 to 50 weight%, from 10 to 40 weight%, or from 10 to 30 weight%, of a phosphate salt.

In one embodiment, the solid, particulate core substrate comprises a secondary nutrient component or a micronutrient component. In addition to the primary nutrients, nitrogen, phosphorus and potassium, the substrate may comprise a source of a secondary nutrient, such as magnesium, calcium and/or sulphur, and/or a source of micronutrient, such as boron, iron, manganese, zinc, molybdenum and/or copper.

In one embodiment, the solid, particulate composition comprises a further coating composition contacting the coating composition comprising choline chloride. Coating compositions can be used for different purposes such as improving the physical/mechanical properties of the particle or adding nutrients, in particular micronutrients, or additives, such as urease inhibitors and/or nitrification inhibitors, to the particle.

In one embodiment, the solid, particulate composition comprises an oil-based or glycol-based coating composition comprising a micronutrient, and a coating composition comprising choline chloride. The coating composition comprising choline chloride may be directly on the surface of the solid, particulate core substrate and the oil-based or glycol based coating composition comprising a micronutrient is present on top of the first coating, or vice-versa.

In one embodiment, the coating composition comprising choline chloride further comprises a urease inhibitor, such as N-(n-butyl)thiophosphoric acid.

In one embodiment, the coating composition comprising choline chloride further comprises a nitrification inhibitor and optionally a urease inhibitor, such as N-(n-butyl)thiophosphoric acid. Nitrification inhibitors slow down the conversion of ammonium ions into nitrate ions in soils. This reduces the risk of nitrate leaching, which occurs when water removes nitrate ions from the soil, causing environmental pollution. Known nitrification inhibitors include dicyandiamide (DCD), 2-chloro-6-trichloromethylpyridine (nitrapyrin), dimethylpyrazole (DMP)-based compounds, such as 3,4-dimethylpyrazole phosphate (DMPP), 3,4-dimethylpyrazole-succinic acid (DMPSA), 3-methylpyrazole (MP); 1-H-1,2,4-triazole (TZ); 3-methylpyrazole-1-carboxamide (CMP); 4-amino-1,2,4-triazole (AT, ATC); 3-amino-1,2,4-triazole; 2-cyanimino-4-hydroxy-6- methylpyrimidine (CP); 2-ethylpyridine; ammonium thiosulfate (ATS); sodium thiosulfate (ST); thiophosphoryl triamide; thiourea (TU); guanylthiourea (GTU); ammonium polycarboxylate; ethylene urea; hydroquinone; phenylacetylene; phenyl-phosphorodiamidate; neemcake; calcium carbide; 5-ethoxy-3-trichloromethyl-1,2,4-thiadiazol (etridiazol; terraole); 2-amino-4-chloro-6- methylpyrimidine (AM); 1-mercapto-1,2,4-triazole (MT); 2-mercaptobenzothiazole (MBT); 2-sulfanilamidothiazole (ST); 5-amino-1,2,4-thiadiazole; 2,4-diamino-6-trichloromethyl-s-triazine (CL-1580); N-2,5-dichlorophenyl succinanilic acid (DCS); nitroaniline, and chloroaniline.

In one embodiment, the coating composition comprises choline chloride and a DMP-based compound, such as DMPP or DMPSA.

In one embodiment, the coating composition comprises choline, a urease inhibitor, such as N-(n-butyl)thiophosphoric acid, a glycol or glycol ether, such as propylene glycol or diethylene glycol monobutyl ether.

In one embodiment, the coating composition comprises choline, malic acid, a urease inhibitor, such as N-(n-butyl)thiophosphoric acid, a glycol or glycol ether, such as propylene glycol or diethylene glycol monobutyl ether.

It was found that a solution of a urease inhibitor in an organic solvent, such as propylene glycol or diethylene glycol monobutyl ether, could be mixed with the coating composition comprising choline chloride, and optionally an organic acid, such as malic acid, before being applied to the solid, particulate core substrate.

In one embodiment, the coating layer of the coating composition covers about 90%, at least 90%, about 95%, or at least 95% of the surface of the solid, particulate core substrate.

In another aspect, the present disclosure provides a method to manufacture a solid, particulate composition according to the present disclosure, the method comprising the steps of: a) providing a solid, particulate core substrate; and b) applying, on the solid, particulate core substrate, a coating composition comprising choline chloride.

The embodiments of the first aspect of this disclosure as discussed above also apply to this other aspect.

The coating composition comprising choline chloride is applied to the substrate using standard means known in the art, such as a coating drum.

The coating composition comprising choline chloride may be prepared according to procedures known in the art. In one embodiment, the coating composition comprising choline chloride is prepared by adding the second component of the eutectic mixture, such as an organic acid, to an amount of choline chloride, and heating up the mixture until the acid is fully dissolved. The mixture is then allowed to cool to ambient temperature and stored in closed containers.

In one embodiment, the solid, particulate core substrate provided in step a) comprises a source of nitrogen, in particular a compound selected from the group consisting of an ammonium salt, a nitrate salt, urea, and mixtures thereof.

In one embodiment, the coating composition is applied to the solid, particulate substrate, such that the solid, particulate composition obtained comprises from 0.01 to 0.2 weight% of the coating composition.

In one embodiment, the coating composition used in step b) comprises an organic acid, in particular an organic acid selected from the group consisting of lactic acid and malic acid.

In one embodiment, the molar ratio of choline chloride to the organic acid in the coating composition used in step b) is from 2:1 to 1:2.

In one embodiment, the coating composition used in step b) comprises a compound selected from the group consisting of urea, urea derivatives, monoethylene glycol and glycerol.

In one embodiment, the molar ratio of choline chloride to the compound selected from the group consisting of urea, urea derivatives, monoethylene glycol and glycerol, in the coating composition used in step b) is from 2:1 to 1:2.

In one embodiment, the solid, particulate core substrate provided in step a) is homogeneous.

In one embodiment, the solid, particulate core substrate provided in step a) comprises a further nutrient component, in particular wherein the nutrient component is selected from the group consisting of a phosphate salt, a potassium salt, and mixtures thereof.

In one embodiment, the solid, particulate core substrate provided in step a) comprises a secondary nutrient component or a micronutrient component.

In one embodiment, the coating composition used in step b) comprises a compound selected from the group consisting of a urease inhibitor, and a nitrification inhibitor.

In another aspect, the present disclosure provides the use of a composition comprising choline chloride for coating a solid, particulate composition, in particular a solid, particulate fertilizer composition, such as the solid, particulate core substrate as described above.

It was found that eutectic mixtures comprising choline chloride were suitable to be coated on particles, in particular fertilizer particles.

In another aspect, the present disclosure provides the use of the solid, particulate composition according to the present disclosure as a fertilizer. The solid, particulate composition according to the present disclosure is suitable to be used as a fertilizer, in particular because the coating composition does not contain toxic elements for the soil and/or crops, and may be biodegradable.

Three examples of a coating composition according to the present disclosure were prepared.

Example 1: To 50.3 g of choline chloride was added 49.7 g of malic acid. This is equivalent to a 1:1 molar ratio. The mixture was heated at for 60 min at a temperature from 65 to 95 °C until the malic acid was dissolved.

Example 2: To a mixture of 35.1 g of choline chloride and 31.2 g of monoethylene glycol was added 33.6 g of malic acid. This is equivalent to a 1 (choline chloride):2 (monoethylene glycol):1 (malic acid) molar ratio. The mixture was heated at a temperature from 65 to 95 °C for 60 min until the malic acid was dissolved. The density of the mixture obtained was 1.23 kg/L, the pH was 1.2 (an amount of the mixture was diluted 9 times in water, i.e. 10 weight% solution in water, and the pH of the aqueous solution was 2.0) and its viscosity 440 cP @12 rpm measured by the Brookfield method.

The viscosity was measured using a Brookfield LVDV- I viscometer, using an S63 spindle at 12 rpm, using 100 mL of sample in a fixed container size. The final result is recorded once a stable reading is obtained.

Example 3 (not according to the invention): To a mixture of 29.4 g of choline chloride and 40.9 g of glycerol was added 29.7 g of malic acid. This is equivalent to a 1 (choline chloride):2 (glycerol):1 (malic acid) molar ratio. The mixture was heated at 65 °C for 60 min until the malic acid was dissolved. The density of the mixture obtained was 1.28 kg/L, the pH was 1.4 and its viscosity 2680 cP @12 rpm measured by the Brookfield method.

The three compositions prepared above were kept for up to 8 weeks at 0 °C, 20 °C, and 45 °C, and remained stable.

The three coating compositions were coated at a rate of 3 litres/ton to different fertilizer particles: urea, YaraRega Calcinit which comprises calcium nitrate, calcium ammonium nitrate, YaraBela Nitromag which contains calcium ammonium nitrate and magnesium nitrate, YaraBela (YB) Sulfan which contains calcium ammonium nitrate and ammonium sulphate, and YaraRega (YR) 13-4-25 which contains ammonium nitrate and potassium nitrate.

Different tests were performed on the coated particles:
- crush test: 30 particles of each fertilizer was submitted to a crush test, wherein a particle is pressed in a dynamometer until breaking point. The average value of 30 particles for each type was recorded.
- bottle test: 100 g of the coated particles were placed in a 2L bottle (one type of fertilizer per bottle), and the bottle was closed with a stopper equipped with a Draeger gas detector tube. The amount of ammonia detected in the Draeger tube was regularly recorded.
- soil test: To 455 g of Baileys of Norfolk graded Topsoil placed into a beaker was added 45 g of demineralized water. The soil and water were mixed until an even consistency and moisture content was obtained. 70 g of the wetted topsoil was placed in a petri dish and evenly distributed. 15 particles of coated fertilizer (1 type of fertilizer per petri dish) was evenly placed on top of the topsoil. The petri dish was closed by a lid comprising a hole wherein a Draeger tube was introduced. The amount of ammonia detected in the Draeger tube was regularly recorded.

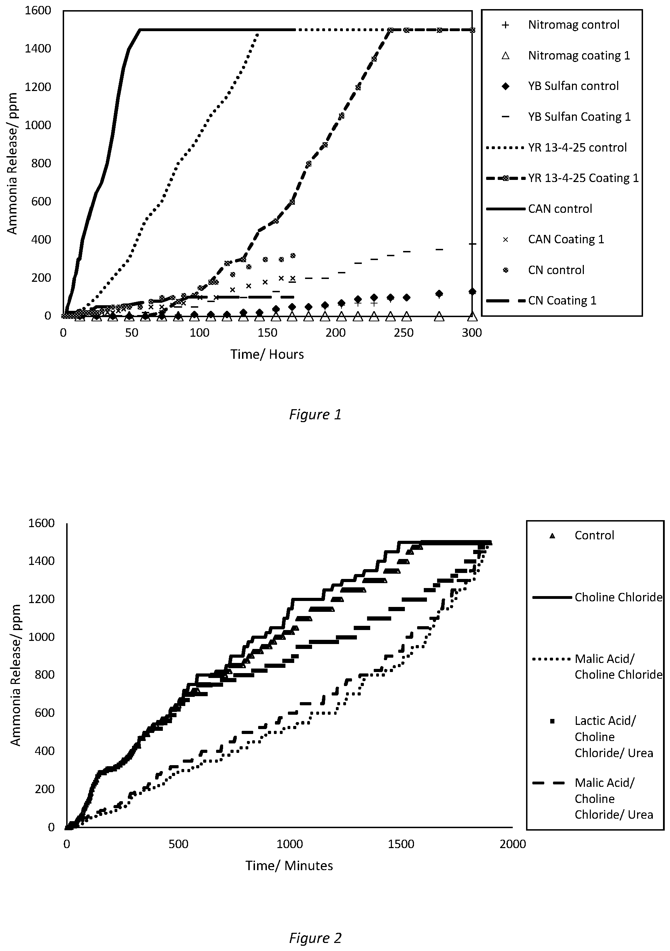

The results of bottle tests using uncoated particles and the particles coated with the composition of example 2 are shown in Figure 1. It can be seen that the composition of example 2 drastically reduces the ammonia emissions of calcium ammonium nitrate (CAN), and YaraRega (YR) 13-4-25, and reduces also the ammonia emissions of calcium nitrate (CN), and YaraBela Nitromag.

Figure 2 shows the results of soil tests, wherein five batches of granular urea were compared: one batch received no coating; one batch was coated with an aqueous solution of choline chloride (CC in Figure 2) (3 litres/ton); one batch was coated with a mixture of malic acid (MA) and choline chloride (1:1 molar ratio, 3 litres/ton); one batch was coated with a mixture of malic acid (MA), urea and choline chloride (1:2:1 molar ratio, 3 litres/ton); and one batch was coated with a mixture of lactic acid (LA), urea and choline chloride (1:2:1 molar ratio, 3 litres/ton). It can be seen the non-coated urea and the urea coated with choline chloride have comparable ammonia emissions. The urea coated with the mixture comprising lactic acid or malic acid and choline chloride showed a significant reduction in ammonia emissions up to 30 hours after application.

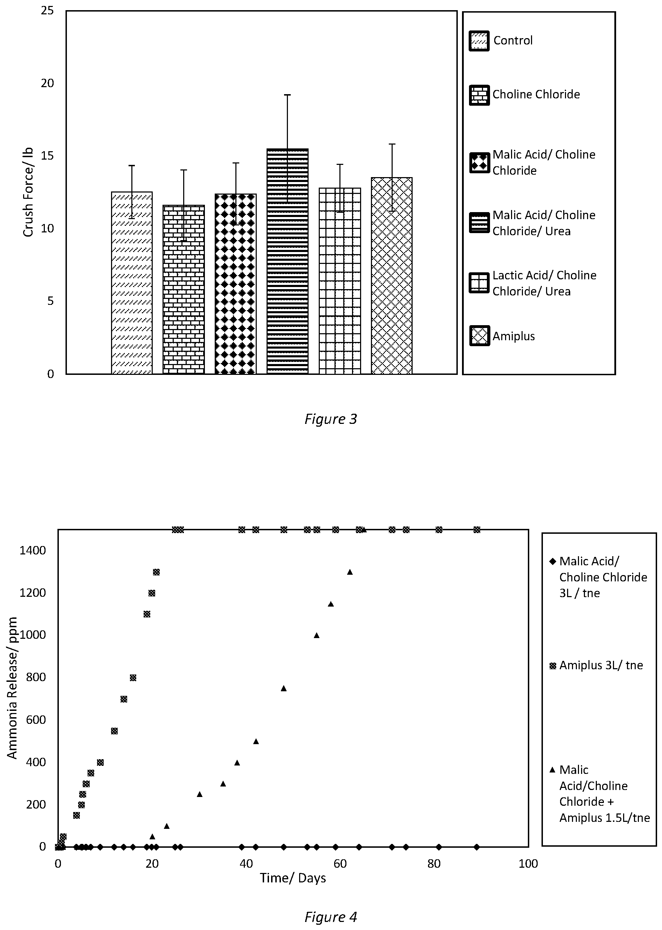

Figure 3 shows the results of crush tests performed on six different batches of urea particles: one batch received no coating; one batch was coated with an aqueous solution of choline chloride (3 litres/ton); one batch was coated with mixture of malic acid and choline chloride (1:1 molar ratio, 3 litres/ton); one batch was coated with a mixture of malic acid, urea and choline chloride (1:2:1 molar ratio, 3 litres/ton); one batch was coated with a mixture of lactic acid, urea and choline chloride (1:2:1 molar ratio, 3 litres/ton); one batch was coated with a 17.5 weight% solution of N-(n-butyl)thiophosphoric acid in propylene glycol (3 litres/ton) (Amiplus). It can be seen that the coating comprising malic acid choline chloride and urea slightly improved the crushing strength of the particles. The other coatings performed similarly to the non-coated particles.

Figure 4 shows the results of a bottle test, as described above, with three different batches of urea particles: one batch was coated with a 17.5 weight% solution of N-(n-butyl)thiophosphoric acid (nBTPT) in propylene glycol (3 litres/ton) (Amiplus); one batch was coated with mixture of malic acid and choline chloride (1:1 molar ratio, 3 litres/ton); and one batch was coated with both the nBTPT solution in propylene glycol (1.5 litre/ton) and the mixture of malic acid and choline chloride (1:1 molar ratio, 1.5 litre/ton). It can be seen that the mixture of malic acid and choline chloride reduces the ammonia emissions due to the nBTPT coating solution.

## Claims

1. A solid, particulate composition comprising a solid, particulate core substrate, and a coating layer of a coating composition contacting the solid, particulate core substrate, wherein the coating composition comprises from 30 to 90 weight% of choline chloride.

2. The solid, particulate composition according to claim 1, wherein the solid, particulate core substrate comprises a source of nitrogen, in particular a compound selected from the group consisting of an ammonium salt, a nitrate salt, urea, and mixtures thereof.

3. The solid, particulate composition according to claim 1 or 2, wherein the solid, particulate composition comprises from 0.01 to 2.0 wt% of the coating composition.

4. The solid, particulate composition according to any one of claims 1 to 3, wherein the coating composition comprises an organic acid, in particular an organic acid selected from the group consisting of lactic acid and malic acid.

5. The solid, particulate composition according to claim 4, wherein the molar ratio of choline chloride to the organic acid is from 2:1 to 1:2.

6. The solid, particulate composition according to any one of claims 1 to 5, wherein the coating composition comprises a compound selected from the group consisting of urea, 1-methyl urea, 1,1-dimethyl urea, and 1,3-dimethyl urea, thiourea, monoethylene glycol and glycerol.

7. The solid, particulate composition according to claim 6, wherein the molar ratio of choline chloride to the compound selected from the group consisting of urea, 1-methyl urea, 1,1-dimethyl urea, and 1,3-dimethyl urea, thiourea, monoethylene glycol and glycerol, is from 2:1 to 1:2.

8. The solid, particulate composition according to any one of claims 1 to 7, wherein the solid, particulate core substrate is homogeneous, such that the solid, particulate core substrate has a homogeneous structure throughout and such that the substrate may contain small particles of different components that are evenly distributed in the substrate.

9. The solid, particulate composition according to any one of claims 1 to 8, wherein the solid, particulate core substrate comprises a further nutrient component, in particular wherein the nutrient component is selected from the group consisting of a phosphate salt, a potassium salt, and mixtures thereof.

10. The solid, particulate composition according to any one of claims 1 to 9, wherein the solid, particulate core substrate comprises a secondary nutrient component or a micronutrient component.

11. The solid, particulate composition according to any one of claims 1 to 10, wherein the coating composition comprises a compound selected from the group consisting of a urease inhibitor, and a nitrification inhibitor.

12. The solid, particulate composition according to any one of claims 1 to 11, wherein the solid, particulate composition comprises a further coating composition contacting the coating composition comprising choline chloride.

13. A method to manufacture a solid, particulate composition according to any one of claims 1 to 12, the method comprising the steps of:
a) providing a solid, particulate core substrate; and
b) applying, on the solid, particulate core substrate, a coating composition comprising choline chloride.

14. Use of the solid, particulate composition according to any one of claims 1 to 12 as a fertilizer.

## Patentansprüche

1. Feste partikuläre Zusammensetzung, die ein festes partikuläres Kernsubstrat und eine Beschichtungsschicht aus einer Beschichtungszusammensetzung umfasst, die das feste, partikuläre Kernsubstrat berührt, wobei die Beschichtungszusammensetzung 30 bis 90 Gewichtsprozent Cholinchlorid umfasst.

2. Feste partikuläre Zusammensetzung gemäß Anspruch 1, wobei das feste partikuläre Kernsubstrat eine Stickstoffquelle umfasst, insbesondere eine Verbindung, die aus der Gruppe ausgewählt ist, die aus einem Ammoniumsalz, einem Nitratsalz, Harnstoff und Gemischen davon besteht.

3. Feste partikuläre Zusammensetzung gemäß Anspruch 1 oder 2, wobei die feste partikuläre Zusammensetzung 0,01 bis 2,0 Gew.-% der Beschichtungszusammensetzung umfasst.

4. Feste partikuläre Zusammensetzung gemäß einem der Ansprüche 1 bis 3, wobei die Beschichtungszusammensetzung eine organische Säure umfasst, insbesondere eine organische Säure, ausgewählt aus der Gruppe bestehend aus Milchsäure und Apfelsäure.

5. Feste partikuläre Zusammensetzung gemäß Anspruch 4, wobei das Molverhältnis von Cholinchlorid zu der organischen Säure 2:1 bis 1:2 beträgt.

6. Feste partikuläre Zusammensetzung gemäß einem der Ansprüche 1 bis 5, wobei die Beschichtungszusammensetzung eine Verbindung umfasst, die aus der Gruppe ausgewählt ist, die aus Harnstoff, 1-Methylharnstoff, 1,1-Dimethylharnstoff und 1,3-Dimethylharnstoff, Thioharnstoff, Monoethylenglykol und Glycerin besteht.

7. Feste partikuläre Zusammensetzung gemäß Anspruch 6, wobei das Molverhältnis von Cholinchlorid zu der Verbindung, ausgewählt aus der Gruppe bestehend aus Harnstoff, 1-Methylharnstoff, 1,1-Dimethylharnstoff und 1,3-Dimethylharnstoff, Thioharnstoff, Monoethylenglykol und Glycerin, zwischen 2:1 und 1:2 liegt.

8. Feste partikuläre Zusammensetzung gemäß einem der Ansprüche 1 bis 7, wobei das feste partikuläre Kernsubstrat homogen ist, so dass das feste partikuläre Kernsubstrat durchgehend eine homogene Struktur aufweist und so dass das Substrat kleine Partikel verschiedener Komponenten enthalten kann, die gleichmäßig in dem Substrat verteilt sind.

9. Feste partikuläre Zusammensetzung gemäß einem der Ansprüche 1 bis 8, wobei das feste partikuläre Kernsubstrat eine weitere Nährstoffkomponente umfasst, insbesondere wobei die Nährstoffkomponente aus der Gruppe ausgewählt ist, die aus einem Phosphatsalz, einem Kaliumsalz und Gemischen davon besteht.

10. Feste partikuläre Zusammensetzung gemäß einem der Ansprüche 1 bis 9, wobei das feste partikuläre Kernsubstrat eine sekundäre Nährstoffkomponente oder eine Mikronährstoffkomponente umfasst.

11. Feste partikuläre Zusammensetzung gemäß einem der Ansprüche 1 bis 10, wobei die Beschichtungszusammensetzung eine Verbindung umfasst, die aus der Gruppe ausgewählt ist, die aus einem Ureasehemmer und einem Nitrifikationshemmer besteht.

12. Feste partikuläre Zusammensetzung gemäß einem der Ansprüche 1 bis 11, wobei die feste partikuläre Zusammensetzung eine weitere Beschichtungszusammensetzung umfasst, die die Beschichtungszusammensetzung berührt, die Cholinchlorid umfasst.

13. Verfahren zur Herstellung einer festen partikulären Zusammensetzung gemäß einem der Ansprüche 1 bis 12, wobei das Verfahren die folgenden Schritte umfasst:
a) Bereitstellen eines festen partikulären Kernsubstrats; und
b) Aufbringen einer Beschichtungszusammensetzung, die Cholinchlorid umfasst, auf das feste partikuläre Kernsubstrat.

14. Verwendung der festen partikulären Zusammensetzung gemäß einem der Ansprüche 1 bis 12 als Düngemittel.

## Revendications

1. - Composition particulaire solide comprenant un substrat de noyau particulaire solide, et une couche d'enrobage d'une composition d'enrobage en contact avec le substrat de noyau particulaire solide, la composition d'enrobage comprenant de 30 à 90% en poids de chlorure de choline.

2. - Composition particulaire solide selon la revendication 1, dans laquelle le substrat de noyau particulaire solide comprend une source d'azote, en particulier un composé choisi dans le groupe consistant en un sel d'ammonium, un sel nitrate, l'urée et les mélanges de ceux-ci.

3. - Composition particulaire solide selon l'une des revendications 1 ou 2, dans laquelle la composition particulaire solide comprend de 0,01 à 2,0 % en poids de la composition d'enrobage.

4. - Composition particulaire solide selon l'une quelconque des revendications 1 à 3, dans laquelle la composition d'enrobage comprend un acide organique, en particulier un acide organique choisi dans le groupe consistant en l'acide lactique et l'acide malique.

5. - Composition particulaire solide selon la revendication 4, dans laquelle le rapport molaire du chlorure de choline à l'acide organique est de 2:1 à 1:2.

6. - Composition particulaire solide selon l'une quelconque des revendications 1 à 5, dans laquelle la composition d'enrobage comprend un composé choisi dans le groupe consistant en l'urée, la 1-méthyl urée, la 1,1-diméthyl urée et la 1,3-diméthyl urée, la thiourée, le monoéthylène glycol et le glycérol.

7. - Composition particulaire solide selon la revendication 6, dans laquelle le rapport molaire du chlorure de choline au composé choisi dans le groupe consistant en l'urée, la 1-méthyl urée, la 1,1-diméthyl urée et la 1,3-diméthyl urée, la thiourée, le monoéthylène glycol et le glycérol, est de 2:1 à 1:2.

8. - Composition particulaire solide selon l'une quelconque des revendications 1 à 7, dans laquelle le substrat de noyau particulaire solide est homogène, de telle sorte que le substrat de noyau particulaire solide a une structure homogène partout et de telle sorte que le substrat puisse contenir de petites particules de différents composants qui sont distribuées uniformément dans le substrat.

9. - Composition particulaire solide selon l'une quelconque des revendications 1 à 8, dans laquelle le substrat de noyau particulaire solide comprend un autre composant nutritif, en particulier dans laquelle le composant nutritif est choisi dans le groupe consistant en un sel phosphate, un sel de potassium et les mélanges de ceux-ci.

10. - Composition particulaire solide selon l'une quelconque des revendications 1 à 9, dans laquelle le substrat de noyau particulaire solide comprend un composant nutritif secondaire ou un composant micronutritif.

11. - Composition particulaire solide selon l'une quelconque des revendications 1 à 10, dans laquelle la composition d'enrobage comprend un composé choisi dans le groupe consistant en un inhibiteur d'uréase et un inhibiteur de nitrification.

12. - Composition particulaire solide selon l'une quelconque des revendications 1 à 11, dans laquelle la composition particulaire solide comprend une autre composition d'enrobage en contact avec la composition d'enrobage comprenant du chlorure de choline.

13. - Procédé de fabrication d'une composition particulaire solide selon l'une quelconque des revendications 1 à 12, le procédé comprenant les étapes consistant à :
a) fournir un substrat de noyau particulaire solide; et
b) appliquer, sur le substrat du noyau particulaire solide, une composition d'enrobage comprenant du chlorure de choline.

14. - Utilisation de la composition particulaire solide selon l'une quelconque des revendications 1 à 12 comme engrais.
